# EUROPÄISCHE PATENTSCHRIFT

(11) **EP 2 555 658 B1**
(45) Veröffentlichungstag und Bekanntmachung des Hinweises auf die Patenterteilung: **08.01.2014**
(21) Anmeldenummer: 10740125.9
(22) Anmeldetag: 03.08.2010
(51) Int. Cl.: A47J 43/10

(54) **GETRÄNKEBEREITER MIT BLOCKIERBARER BETÄTIGUNGSSTANGE**
BEVERAGE MAKER HAVING A LOCKABLE ACTUATION ROD
PRÉPARATEUR DE BOISSONS À BLOCAGE DE LA TIGE D'ACTIONNEMENT

(30) Priorität: 08.04.2010 CH 508102010
(43) Veröffentlichungstag der Anmeldung: 13.02.2013
(73) Patentinhaber: PI-Design AG, 6234 Triengen (CH)
(72) Erfinder: BODUM, Jørgen, CH-6045 Meggen (CH)
(74) Vertreter: Rutz, Andrea
(86) Internationale Anmeldenummer: PCT/CH2010/000189
(87) Internationale Veröffentlichungsnummer: WO 2011/014972

(56) Entgegenhaltungen:
- US-A- 2 162 348
- US-B1- 6 324 966
- US-S1- D 587 069

## Beschreibung

### TECHNISCHES GEBIET

Die vorliegende Erfindung betrifft einen Getränkebereiter, der ein nach oben offenes Gefäss und einen das Gefäss überdeckenden Deckel mit einer Entnahmeöffnung aufweist. Eine Betätigungsstange mit einem daran angebrachten Zubereitungselement, z.B. einem Mischelement, einem Schäumelement oder einem Stempelfilter, durchsetzt den Deckel und ist gegenüber dem Deckel zwischen einer unteren und einer oberen Stellung bewegbar. Ein Verschluss verschliesst in einer Schliessstellung die Entnahmeöffnung des Deckels. Die Betätigungsstange ist durch den Verschluss in ihrer unteren Position blockierbar, wenn dieser eine Haltestellung einnimmt.

### STAND DER TECHNIK

Aus dem Stand der Technik sind Stempelfilter-Kaffeebereiter (im englischsprachigen Raum häufig als "French Press" bezeichnet) bekannt, aus denen der Kaffee nach seiner Zubereitung unmittelbar getrunken werden kann. Derartige Kaffeebereiter werden insbesondere von der Bodum®-Gruppe unter der Bezeichnung "Travel Press" angeboten. Ein derartiger Kaffeebereiter ist in US 6,324,966 offenbart. Der Kaffeebereiter weist ein Gefäss und einen das Gefäss nach oben hin überdeckenden Deckel auf. Im Deckel ist eine Trinköffnung für den fertigen Kaffee vorgesehen. Der Deckel ist von einer Kolbenstange durchsetzt, an deren unterem Ende ein Stempelfilter mit einem feinmaschigen Netz angebracht ist. Der Stempelfilter wird über die Kolbenstange im Gefäss nach unten gedrückt, um nach dem Aufbrühen den ausgelaugten Kaffeesatz in einem bodennahen Bereich des Gefässes zurückzuhalten. Hierzu ist am oberen Ende der Kolbenstange ein Griffelement angebracht. In einer Ausführungsform ist an dem Griffelement ein Verschluss schwenkbar angelenkt. In einer vollständig eingeschobenen, unteren Position der Kolbenstange lässt sich der Verschluss um eine horizontale Achse zwischen einer die Trinköffnung verschliessenden Schliessstellung und einer die Trinköffnung freigebenden Freigabestellung verschwenken. In einer anderen Ausführungsform ist der Verschluss direkt am Deckel angelenkt. Der Deckel weist eine Mantelwand mit einer Trinkkante auf, die es ermöglicht, den fertigen Kaffee direkt aus der Trinköffnung heraus zu trinken. Damit das Griffelement der Kolbenstange nicht beim Trinken stört, ist im Deckel eine Vertiefung ausgebildet, die das Griffelement aufnimmt. Um zu verhindern, dass die Kolbenstange beim Trinken in das Gesicht des trinkenden Benutzers rutscht, kann eine lösbare Rastverbindung zwischen dem Griffelement und dem Deckel vorgesehen sein. Um die Rastverbindung zu lösen, ergreift der Benutzer das Griffelement bzw. bei der entsprechenden Ausführungsform den am Griffelement angelenkten Verschluss, um das Griffelement nach oben zu ziehen. Diese Handhabung ist allerdings etwas umständlich und hygienisch nicht völlig befriedigend.

Aus dem Stand der Technik sind auch andere Arten von Getränkebereitern bekannt, die anstelle eines Stempelfilters andere Arten von Zubereitungselementen an einer Betätigungsstange aufweisen, wobei die Betätigungsstange einen Deckel des Gefässes durchsetzt. So ist z.B. aus US 2,162,348 ein Getränkebereiter bekannt, der eine Betätigungsstange in Form einer Steilgewindespindel aufweist, die in einem dazu komplementären Innengewinde im Deckel des Getränkebereiters geführt ist. Am oberen Ende der Betätigungsstange ist ein Griffelement in Form eines Griffknopfes drehbar angebracht. Am unteren Ende der Betätigungsstange ist ein propellerartiges Mischelement drehfest angebracht. Zur Betätigung des Mischelements wird das Griffelement abwechselnd nach oben gezogen und nach unten gedrückt. Aufgrund ihrer Gewindeführung vollführen die Betätigungsstange und das Mischelement dabei eine schraubenförmige Bewegung, d.h. das Mischelement dreht sich und bewegt sich dabei gleichzeitig aufwärts bzw. abwärts, um eine gute Durchmischung des Inhalts des Gefässes zu bewirken. Um zu verhindern, dass die Betätigungsstange beim Ausgiessen des Getränks herausrutscht, ist am Deckel ein Verschluss vorgesehen, der in einer Schliessstellung eine Entnahmeöffnung des Deckels verschliesst und der in einer Haltestellung die Entnahmeöffnung freigibt und gleichzeitig das Griffelement in seiner untersten Position blockiert. Dazu ist der Verschluss zwischen der Schliessstellung und der Haltestellung horizontal verschiebbar, wobei er in der Haltestellung über einen am unteren Rand des Griffelements ausgebildeten Ringflansch greift und diesen bezüglich einer vertikalen Bewegung nach oben hin blockiert. Wenn sich das Griffelement jedoch nicht in seiner untersten Position befindet, lässt sich der Verschluss dennoch betätigen, ohne dass das Griffelement blockiert wird, und die Betätigungsstange kann bei einer solchen Fehlbedienung dennoch beim Ausgiessen herausrutschen.

### DARSTELLUNG DER ERFINDUNG

Es ist daher eine Aufgabe der vorliegenden Erfindung, einen Getränkebereiter mit einem Zubereitungselement an einer Betätigungsstange anzugeben, bei der die Betätigungsstange zur Entnahme des Getränks einfach und sicher blockierbar ist und Fehlbedienungen vermieden werden.

Diese Aufgabe wird durch einen Getränkebereiter gemäss Anspruch 1 gelöst. Vorteilhafte Ausgestaltungen sind in den abhängigen Ansprüchen angegeben.

Es wird also ein Getränkebereiter angegeben, der aufweist:
ein nach oben offenes Gefäss;
einen das Gefäss überdeckenden Deckel, in dem eine Entnahmeöffnung ausgebildet ist;
eine sich durch eine zentrale Durchführungsöffnung des Deckels hindurch in das Gefäss hinein erstreckende, eine Längsachse definierende Betätigungsstange;
ein innerhalb des Gefässes an der Betätigungsstange, vorzugsweise an deren unterem Ende, angebrachtes Zubereitungselement;
ein ausserhalb des Gefässes an der Betätigungsstange, vorzugsweise an deren oberem Ende, angebrachtes Griffelement, das zusammen mit der Betätigungsstange zwischen einer deckelnahen unteren Stellung und einer deckelfemen oberen Stellung bewegbar ist, und
einen mit dem Deckel bewegbar verbundenen Verschluss, der zwischen einer die Entnahmeöffnung verschliessenden Schliessstellung und einer die Entnahmeöffnung freigebenden Haltestellung bewegbar ist.

In der Haltestellung fixiert der Verschluss das Griffelement in seiner unteren Stellung.

Dadurch wird die Betätigungsstange wirksam blockiert. Um diese Fixierung zu erreichen, ist der Verschluss zwischen der Schliessstellung und der Haltestellung um eine quer zur Längsachse verlaufende horizontale Schwenkachse gegenüber dem Deckel verschwenkbar ausgebildet. Dadurch wird es möglich, den Verschluss so zu gestalten, dass er nur dann in die Haltestellung schwenkbar ist, wenn sich das Griffelement in seiner unteren Stellung befindet, da sich andernfalls die Betätigungsstange im Weg befinden würde. Bevorzugt ist dazu der Verschluss über das Griffelement hinweg von der Schliessstellung in die Haltestellung schwenkbar, wenn sich das Griffelement in oder nahe seiner unteren Stellung befindet.

Der Verschluss ist bevorzugt so ausgestaltet, dass er in der Haltestellung das Griffelement zumindest teilweise nach oben hin überdeckt und es dadurch blockiert. Dazu kann das Griffelement bezüglich der Längsachse asymmetrisch ausgebildet sein, so dass es einen achsnahen Bereich sowie einen vom achsnahen Bereich aus quer zur Längsachse hervorstehenden Bereich aufweist, der in der Haltestellung z.B. von der Entnahmeöffnung des Deckels weg weist. Dieser hervorstehende Bereich verläuft dann vorzugsweise in der unteren Stellung des Griffelements beabstandet zum Deckel (insbesondere zu einer Deckwand des Deckels), um das Ergreifen des Griffelements mit dem Finger eines Benutzers zu erleichtern. Der Verschluss überdeckt dann vorzugsweise in der Haltestellung den hervorstehenden Bereich des Griffelements zumindest teilweise. Der Verschluss kann in anderen Ausgestaltungen das Griffelement aber auch in einem anderen Bereich, z.B. in einem um ca. 90° zur Entnahmeöffnung um die Längsachse versetzten Bereich, überdecken und dadurch fixieren, oder der Verschluss kann das Griffelement an dessen radialer Aussenseite einklemmen, statt es zu überdecken.

Am Verschluss ist mindestens eine erste Raststruktur ausgebildet, um den Verschluss in der Haltestellung lösbar mit dem Deckel zu verrasten. Bei der ersten Raststruktur kann es sich insbesondere um eine Vertiefung in Form einer Rastkerbe im Verschluss handeln, die in der Haltestellung mit einem hinteren Randbereich des Deckels verrastbar ist.

Ausserdem ist am Verschluss vorzugsweise mindestens eine zweite Raststruktur ausgebildet, um den Verschluss auch in der Schliessstellung lösbar mit dem Deckel zu verrasten. Dabei hat es sich bewährt, wenn der Verschluss einen vorstehenden Betätigungsbereich aufweist, und wenn die zweite Raststruktur durch einen hakenartig nach vorne gebogenen Abschnitt des Betätigungsbereichs gebildet ist, der in der Schliessstellung einen vorderen Randbereich des Deckels überdeckt und mit diesem lösbar verrastet. Die erste Raststruktur ist dann bevorzugt in einem rückwärtigen, näher zur Längsachse als die zweite Raststruktur gelegenen Abschnitt des Betätigungsbereichs ausgebildet. Der Betätigungsbereich erstreckt sich dabei in der Schliessstellung vorzugsweise im Wesentlichen entlang einer sowohl nach oben als auch bezüglich der Längsachse radial nach aussen weisenden Richtung, d.h. schräg nach oben, und liegt dabei an einer Mantelwand des Deckels an, die eine Deckwand des Deckels mindestens teilweise umgibt. Wie nachfolgend noch beschrieben wird, kann sich diese Mantelwand nach oben hin aufweiten und mit ihrem vorderen Randbereich eine Trinkkante bilden. Die zweite Raststruktur verrastet in derartigen Ausführungsformen also mit dem vorderen Randbereich der Mantelwand, wenn sich der Verschluss in der Schliessstellung befindet, und die erste Raststruktur verrastet dann bevorzugt mit einem dem vorderen Randbereich radial gegenüberliegenden hinteren Randbereich der Mantelwand, wenn sich der Verschluss in der Haltestellung befindet.

Bevorzugt verläuft die Schwenkachse von der Entnahmeöffnung aus gesehen hinter der Längsachse, d.h. sie hat einen grösseren minimalen Abstand von der Entnahmeöffnung als die Längsachse. Dadurch wird es erleichtert, den Verschluss so zu gestalten, dass er mit seinem Betätigungsbereich in der Haltestellung nach hinten hin über den Deckel hinausragt, so dass er leicht wieder aus der Haltestellung gelöst werden kann. Ausserdem führt diese rückwärtige Anordnung der Schwenkachse dazu, dass der Schwenkbereich des Verschlusses bei herausgezogener Betätigungsstange nur sehr klein ist, so dass es nicht möglich ist, versehentlich das Getränk aus dem Gefäss zu entnehmen, wenn die Betätigungsstange ganz oder teilweise herausgezogen ist.

Bevorzugt ist der Deckel so gestaltet, dass es möglich ist, das fertige Getränk unmittelbar durch die Entnahmeöffnung zu trinken. Dazu weist der Deckel dann zumindest in einem vorderen Randbereich eine Trinkkante auf, die dazu ausgebildet ist, ein durch die Entnahmeöffnung (die dann als Trinköffnung bezeichnet werden kann) entnehmbares Getränk über die Trinkkante unmittelbar zum Mund zu führen. Vorzugsweise wird die Trinkkante durch den oberen Rand einer sich nach oben hin aufweitenden, somit also schräg nach oben und äussen verlaufenden Mantelwand des Deckels gebildet, wie dies vorstehend schon beschrieben wurde. Alternativ ist es aber auch denkbar, dass der Deckel derart ausgebildet ist, dass das fertige Getränk durch die Entnahmeöffnung hindurch ausgiessbar ist. In diesem Fall ist am Deckel vorzugsweise ein schnabelartiger Ausgiesser ausgebildet.

Damit das Griffelement beim Trinken oder beim Ausgiessen nicht stört, ist im Deckel (vorzugsweise in der Deckwand des Deckels) eine Vertiefung ausgebildet, die das Griffelement in der unteren Stellung des Griffelements zumindest teilweise aufnimmt. Bei der oben angegebenen asymmetrischen Ausgestaltung des Griffelements mit einem hervorstehenden Bereich ragt dieser Bereich dann vorzugsweise aus der Vertiefung heraus, um das Ergreifen des Griffelements zu erleichtern. Am Griffelement und/oder an der Vertiefung kann optional zudem eine umlaufende Dichtung ausgebildet sein, um das Griffelement gegen die Vertiefung zu dichten. Zwischen dem Gefäss und dem Deckel ist vorzugsweise ebenfalls eine umlaufende Dichtung vorhanden, so dass der gesamte Getränkebereiter in der Schliessstellung des Verschlusses flüssigkeitsdicht verschlossen ist.

Der Verschluss weist vorzugsweise einen im Wesentlichen starren Träger und einen damit verbundenen Verschlusskörper auf, der z.B. in die Entnahmeöffnung hineinragen kann oder umliegend um die Entnahmeöffnung auf dem Deckel aufliegen kann und dabei die Entnahmeöffnung dichtend verschliesst. Insbesondere kann dieser Verschlusskörper aus einem weicheren Material als der Träger gefertigt sein und z.B. im Zweikomponenten-Spritzgussverfahren an den Träger angespritzt sein. Der Träger weist vorzugsweise zwei Arme auf, die vom Verschlusskörper aus beidseitig an der Durchführungsöffnung (und somit an der Betätigungsstange) vorbeigeführt sind und deren freie Enden im Bereich der Schwenkachse schwenkbar mit dem Deckel verbunden sind. Beabstandet zum Verschlusskörper kann ausserdem am Träger (oder am Deckel) ein Federelement ausgebildet sein, das in der Schliessstellung den Verschluss in Richtung der Haltestellung mit einer Federkraft beaufschlagt. Dies erleichtert es, den Verschluss nach dem Lösen der Verrastung zwischen der zweiten Raststruktur und dem Deckel aus der Schliessstellung in die Haltestellung zu verschwenken. Dieses Federelement kann ebenfalls aus einem weicheren Material als der Träger gefertigt sein, insbesondere aus demselben Material wie der Verschlusskörper, und kann gemeinsam mit diesem am Träger angespritzt sein.

Der Getränkebereiter kann insbesondere als Mischvorrichtung zur Zubereitung von Milchmischgetränken, z.B. Kakao, oder von Getränken aus löslichen Pulvern, z.B. von löslichem Kaffee oder löslichen Kaffee-Mischgetränken wie Cappuccino-Mischungen, vorgesehen sein. Dazu kann die Betätigungsstange als Steilgewindespindel mit einem Aussengewinde ausgebildet sein, und in der Durchführungsöffnung des Deckels kann ein zum Aussengewinde komplementäres Innengewinde ausgebildet sein. Das Innengewinde kann insbesondere in einem als Lagerhülse dienenden Bereich des Deckels ausgebildet sein. Dieser Bereich ist vorzugsweise unterhalb der vorstehend erwähnten Vertiefung für die (teilweise) Aufnahme des Griffelements ausgebildet. Die Steilgewindespindel weist eine Gewindesteigung auf, die gross genug ist, dass eine entlang der Längsachse wirkende Kraft derart zu einem Drehmoment um die Längsachse führt, dass dadurch die Steilgewindespindel gleichzeitig mit einer Auf- oder Abwärtsbewegung in Drehung versetzt wird. Vorzugsweise weist die Steilgewindespindel dazu ein Verhältnis von Gewindesteigung P zu Durchmesser D von P/D > 5 auf. Sie kann eingängig oder mehrgängig sein und ist vorzugsweise dreigängig.

Damit das Griffelement bei der Schraubenbewegung der Betätigungsstange nicht mitdreht, ist das Griffelement vorzugsweise um die Längsachse drehbar an der Betätigungsstange angebracht.

Bei dem Zubereitungselement handelt es sich vorzugsweise um ein starr mit der Betätigungsstange verbundenes Misch- oder Rührelement mit mindestens einem sich von der Gewindespindel aus quer zur Längsachse nach aussen erstreckenden Mischarm, vorzugsweise mindestens zwei, insbesondere drei solchen Mischarmen, die nach Art eines Propellers angeordnet und jeweils mit einem Anstellwinkel zur Horizontalen geneigt sein können. Selbstverständlich sind auch andere Arten von Misch- oder Rührelementen möglich.

Alternativ kann es sich beim Zubereitungselement auch um einen Kolben mit einem sich quer zur Längsachse erstreckenden feinmaschigen Sieb handeln. In diesem Fall kann der Getränkebereiter z.B. als Stempelfilter-Kaffeebereiter, insbesondere nach Art eines "Travel Mug", oder auch als Milchschäumer ausgebildet sein. Je nach Anwendung kann dabei die Betätigungsstange als einfache Kolbenstange oder als Gewindespindel ausgebildet sein. Andere Arten von Zubereitungselementen, z.B. nach Art eines Schneebesens mit Drahtschlingen, sind ebenfalls möglich.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines erfindungsgemässen Getränkebereiters gemäss einer ersten Ausführungsform,
- Fig. 2: einen zentralen Längsschnitt durch den Getränkebereiter der Fig. 1;
- Fig. 3: eine perspektivische Ansicht des Getränkebereiters, in der der Verschluss in seiner Schliessstellung erkennbar ist;
- Fig. 4: eine perspektivische Ansicht des Getränkebereiters, in der der Verschluss in seiner Haltestellung erkennbar ist; und
- Fig. 5: einen zentralen Längsschnitt durch den Deckelbereich eines erfindungsgemässen Getränkebereiters gemäss einer zweiten Ausführungsform.

### BESCHREIBUNG BEVORZUGTER AUSFÜHRUNGSFORMEN

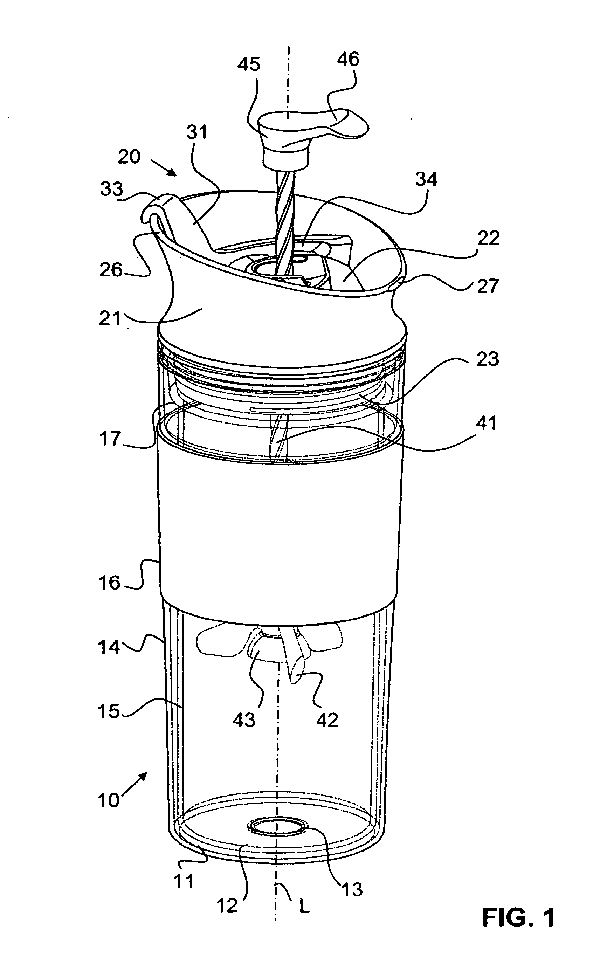

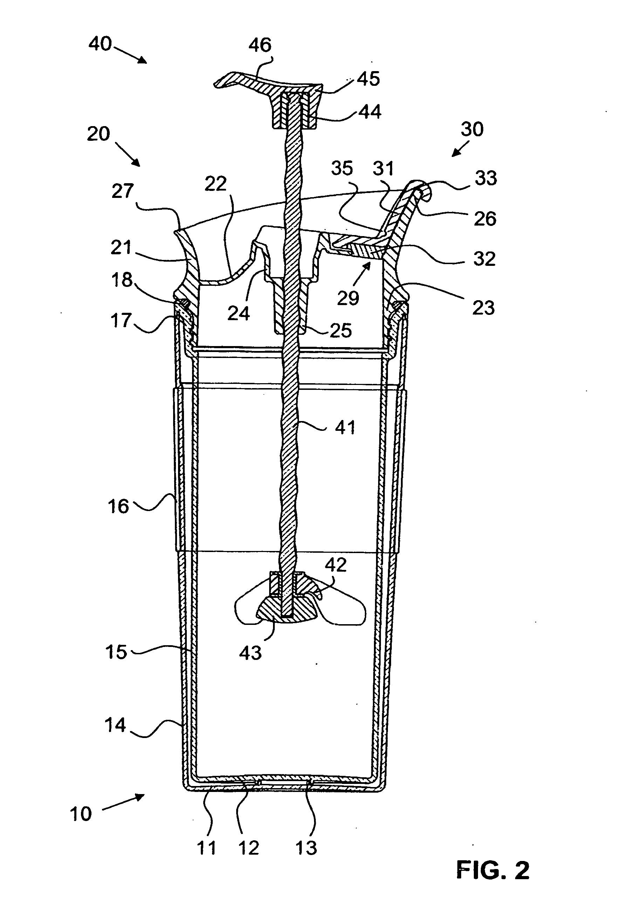

In den Figuren 1 bis 4 ist ein erfindungsgemässer Getränkebereiter gemäss einer ersten Ausführungsform dargestellt. Der Getränkebereiter umfasst ein doppelwandiges Gefäss 10 aus einem transparenten Kunststoff, mit einem äusseren Boden 11, einem inneren Boden 12, einer äusseren Seitenwand 14 und einer inneren Seitenwand 15. In einem ringförmigen Verbindungsbereich 13 liegt der innere Boden 12 auf dem äusseren Boden 11 auf. Die äussere Seitenwand 14 und die innere Seitenwand 15 sind in ihrem oberen Randbereich miteinander verbunden, insbesondere miteinander verschweisst. Eine Manschette 16 aus einem verhältnismässig weichen Material, z.B. Silikongummi, liegt in einer leichten Vertiefung der äusseren Seitenwand 14 auf deren Aussenseite auf und umgibt die äussere Seitenwand 14 in diesem Bereich. In einem oberen Randbereich der inneren Seitenwand 15 ist ein Innengewinde 17 zur Verbindung des Gefässes 10 mit einem Deckel 20 ausgebildet.

Der Deckel 20 weist eine umlaufende Mantelwand 21 auf, die sich nach oben hin aufweitet. Zu einem vorderen Randbereich hin, der eine Trinkkante 26 bildet, erstreckt sich die Mantelwand weiter nach oben als zu einem hinteren Randbereich 27. Die Mantelwand 21 umgibt eine Deckwand 22, in der angrenzend an den vorderen Bereich der Mantelwand eine als Trinköffnung 29 dienende Entnahmeöffnung ausgebildet ist. Unterhalb der Deckwand 22 ist an der Aussenseite der Mantelwand 21 ein Aussengewinde 23 ausgebildet, das in das Innengewinde 17 des Gefässes 10 eingreift. Ein Dichtring 18 dichtet den Deckel 20 gegen das Gefäss 10. In der Deckwand 22 ist eine Vertiefung 24 zur Aufnahme eines nachstehend noch näher beschriebenen Griffelements 45 ausgebildet. Unterhalb der Vertiefung ist eine Führungshülse 25 ausgebildet, die zur Führung einer Betätigungsstange in Form einer nachstehend noch näher beschriebenen Gewindespindel 41 dient und hierzu ein Innengewinde aufweist. Die Führungshülse 25 begrenzt dabei eine vertikale Durchführungsöffnung für die Gewindespindel 41.

Die Gewindespindel 41 ist Teil einer Mischeinheit 40 und definiert mit ihrer Längsrichtung eine vertikale Längsachse L. Auf ihrer Aussenseite trägt sie ein mehrgängiges (hier dreigängiges) Steilgewinde, dessen Verhältnis von Gewindesteigung zu Durchmesser hier deutlich mehr als 5 beträgt. Das Innengewinde der Führungshülse 25 ist entsprechend komplementär zu diesem Steilgewinde ausgebildet. Die Gewindespindel 41 ist an ihrem unteren Ende starr mit einem Mischelement 42 in Form eines dreiblättrigen Propellers verbunden. Eine Sicherungsmutter 43 ist auf das untere Ende der Gewindespindel 41 aufgeschraubt und fixiert das Mischelement 42 an der Gewindespindel. Zu Reinigungszwecken ist die Sicherungsmutter 43 lösbar. Dadurch ist das Mischelement 42 von der Gewindespindel 41 abnehmbar. An ihrem oberen Ende ist die Gewindespindel 41 drehbar mit einem Griffelement 45 verbunden. Dazu sitzt das Griffelement 45 auf einer drehbar an der Gewindespindel 41 angebrachten Buchse 44. Das Griffelement 45 ist asymmetrisch ausgebildet, mit einem rotationssymmetrischen, sich leicht nach oben hin aufweitenden zentralen, achsnahen Bereich und einem daraus quer zur Längsachse L hervorstehenden Griffbereich 46, der das Ergreifen des Griffelements 45 erleichtert. An seinem freien Ende ist der Griffbereich 46 leicht nach unten hin abgewinkelt.

Die Mischeinheit 40 lässt sich mit Hilfe des Griffelements 45 gegenüber dem Deckel 20 auf und ab bewegen. Dabei ist die Gewindespindel 41 in der Führungshülse 25 derart geführt, dass sie bei Druck oder Zug entlang der Längsrichtung eine Schraubenbewegung um die Längsrichtung ausführt. Dadurch führt auch das Mischelement 42 eine Schraubenbewegung aus, also eine Überlagerung aus einer Translation entlang der Längsachse und einer Drehung um die Längsachse. Da das Griffelement 45 drehbar an der Gewindespindel 41 angebracht ist, braucht das Griffelement 45 die Drehbewegung nicht mitzumachen und kann vom Benutzer in beliebiger Orientierung zum Gefäss 10 und Deckel 20 geführt werden.

In seiner untersten Position wird das Griffelement 45 teilweise in der Vertiefung 24 des Deckels 20 aufgenommen, wenn sich der hervorstehende Griffbereich 46 in eine radiale Richtung erstreckt, die von der Trinköffnung 29 weg weist. Dabei verläuft der Griffbereich 46 beabstandet von der Deckwand 22 des Deckels, die in diesem Bereich nach unten hin vorgewölbt verläuft. Um das Griffelement 45 wieder aus der Vertiefung 24 herauszuziehen, lässt sich dadurch das Griffelement 45 ohne Weiteres von unten her mit einem Finger des Benutzers am Griffbereich 46 fassen und wieder hinaufziehen.

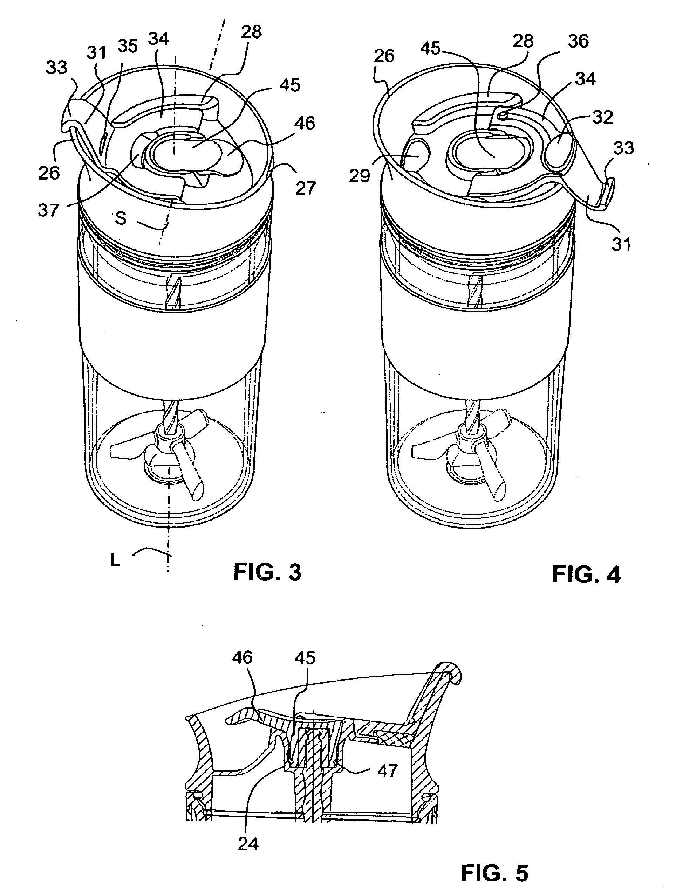

Am Deckel 20 ist ein Verschluss 30 um eine horizontale Schwenkachse S (Fig. 3) schwenkbar angelenkt. Die Schwenkachse S verläuft zwar zentrumsnah, jedoch auf einer der Trinköffnung 29 abgewandten Seite der Längsachse L. Der Verschluss 30 umfasst einen Träger 34 aus einem formstabilen Material, an dessen Unterseite ein Verschlusskörper 32 (Fig. 4) aus einem weicheren, elastisch verformbaren Material im Zweikomponenten-Spritzgussverfahren ausgebildet ist. Beabstandet vom Verschlusskörper 32 ist an der Unterseite des Trägers 34 ausserdem ein Federelement 36 (Fig. 4) aus demselben elastisch verformbaren Material ausgebildet, welches mit dem Verschlusskörper 32 über eine Materialbrücke verbunden ist und dazu dient, den Verschluss in der Stellung der Fig. 3 leicht nach oben hin mit einer Federkraft zu belasten. Der Träger 34 weist zwei Arme auf, die sich vom Verschlusskörper 32 aus jeweils um einen Viertelkreis in der Horizontalen um die Längsachse L herum erstrecken, wenn sich der Verschluss in der Stellung der Fig. 3 befindet. Die freien Enden der Arme sind jeweils über zwei seitlich vorstehende Stiftbereiche um die Schwenkachse S verschwenkbar mit dem Deckel verbunden. Der Träger weist ausserdem einen vorstehenden Betätigungsbereich 31 auf, der in der Stellung der Fig. 3 vom restlichen Träger schräg nach vorne und oben absteht und an der Mantelwand 21 des Deckels 20 anliegt. Am freien Ende des Betätigungsbereichs 31 ist eine hakenartige Struktur 33 ausgebildet, die in der Stellung der Fig. 3 über die Trinkkante 26 ragt und eine lösbare Rastverbindung mit der Trinkkante 26 eingeht. Dadurch lässt sich der Verschluss in der Stellung der Fig. 3 lösbar am Deckel sichern. In dieser Stellung verschliesst der Verschlusskörper 32 die Trinköffnung 29. Diese Stellung wird daher im Folgenden als die Schliessstellung bezeichnet. Zwei Flankenbereiche 28 des Deckels 20 flankieren in dieser Stellung den Verschluss 30 seitlich.

In der unteren Stellung der Mischeinheit 40, d.h. insbesondere, wenn sich das Griffelement 45 in der Vertiefung 24 befindet, lässt sich der Verschluss 30 von der Schliessstellung in eine Haltestellung verschwenken, die in der Fig. 4 illustriert ist. Dabei wird der Verschluss 30 über das Griffelement 45 hinweg verschwenkt. In der Haltestellung gibt der Verschluss 30 die Trinköffnung 29 frei und fixiert gleichzeitig die Mischeinheit 40 derart, dass sie sich nicht aus der unteren Stellung heraus nach oben bewegen kann. Dazu überdeckt der Verschluss 30 den hervorstehenden Griffbereich 46 des Griffelements 45 im Bereich seines nach unten abgewinkelten freien Endes. Der Träger 34 des Verschlusses 30 ist hierzu auf seiner dem Verschlusskörper 32 abgewandten Seite mit einer Anschrägung 37 (Fig. 3) versehen. Der Verschluss 30 ist in dieser Stellung mit einem hinteren Randbereich 27 der Mantelwand 21 des Deckels verrastet. Hierzu ist am Betätigungsbereich 31 des Verschlusses 30 eine Rastkerbe 35 ausgebildet, die wegen der leicht dezentralen Anordnung der Schwenkachse S näher zur Schwenkachse S liegt als die hakenartige Struktur 33.

Zur Zubereitung eines Getränks fällt der Benutzer die Zutaten in das offene Gefäss 10 ein, im Fall von löslichem Kaffee z.B. lösliches Kaffeepulver, das gegebenenfalls mit weiteren Zutaten wie Milchpulver und Zucker gemischt sein kann, und giesst diese mit Wasser oder einer anderen Flüssigkeit, z.B. Milch, auf. Sodann setzt er den Deckel 20 auf das Gefäss 10 auf und schraubt ihn fest in das Gefäss 10 ein. Nun ergreift der Benutzer das Griffelement 45 und bewegt damit die Mischeinheit 40 auf und ab. Dadurch werden die Gewindespindel 41 und das Mischelement 42 in die schon erwähnte Schraubenbewegung versetzt und durchmischen dadurch die Zutaten des Getränks. Der Verschluss 30 befindet sich dabei in der Schliessstellung, um ein Herausspritzen des Getränks zu vermeiden. Um das Getränk anschliessend zu trinken, bringt der Benutzer die Mischeinheit 40 in ihre untere Stellung und verschwenkt den Verschluss 30 in die Haltestellung, anfangs unterstützt durch das Federelement 36. In der Haltestellung blockiert der Verschluss 30 die Mischeinheit 40 in der unteren Stellung. Der Benutzer kann das Getränk nun über die Trinköffnung 29 und die Trinkkante 26 bequem trinken, ohne dabei durch die Mischeinheit 40 behindert zu werden und ohne dass die Gefahr besteht, dass die Mischeinheit 40 plötzlich aus dem Deckel herausrutscht. Durch die doppelwandige Ausgestaltung des Gefässes behält das Getränk dabei über längere Zeit seine Temperatur.

In der Fig. 5 ist eine zweite Ausführungsform der Erfindung illustriert, die ein Variante der ersten Ausführungsform darstellt. Dabei sind gleichwirkende Teile mit den selben Bezugszeichen wie in den Figuren 1-4 bezeichnet. Diese Ausführungsform unterscheidet sich von der ersten Ausführungsform dadurch, dass das Griffelement 45 in seinem achsnahen Bereich ein umlaufendes Dichtelement 47 in Form eines O-Rings aufweist, das zusammen mit der Vertiefung 24 eine Abdichtung zwischen dem Griffelement 45 und dem Deckel 20 herstellt.

Selbstverständlich sind eine Vielzahl von Abwandlungen möglich, ohne den Bereich der Erfindung zu verlassen, und die Erfindung ist keinesfalls auf die vorstehenden Ausführungsbeispiele beschränkt.

So braucht das Gefäss insbesondere nicht doppelwandig und/oder transparent zu sein. Der Deckel braucht nicht dazu ausgestaltet zu sein, unmittelbar aus dem Gefäss zu trinken, sondern kann auch zum Ausgiessen des Getränks ausgebildet sein. Das Gefäss kann z.B. mit einem Henkel versehen sein. Eine Vielzahl anderer Verschlussformen sind möglich, ohne dass die grundsätzliche Funktionsweise des Verschlusses verändert werden muss. Insbesondere ist es dabei denkbar, dass der Verschluss nur auf einer Seite der Längsachse am Deckel angelenkt ist, so dass der Verschluss eine asymmetrische Grundform aufweisen kann. Der Verschlusskörper kann ebenfalls anders ausgebildet sein und z.B. eine umlaufende Dichtlippe bilden, welche die Entnahmeöffnung umgibt. Die Zubereitungseinheit kann andere Zubereitungselemente als das hier illustrierte propellerartige Mischelement aufweisen, z.B. ein Siebelement, eine Drahtschlingenanordnung usw. Das Griffelement der Zubereitungseinheit sowie die Vertiefung im Deckel zu dessen Aufnahme können verschiedene andere Formen aufweisen. Dabei kann der Griffelement statt in einem hinteren, der Entnahmeöffnung abgewandten Bereich auch in einem seitlichen, von der Entnahmeöffnung um weniger als 180° versetzten Bereich fixiert sein. Eine Vielzahl weiterer Abwandlungen ist möglich.

**BEZUGSZEICHENLISTE**

| | | | |
|---|---|---|---|
| 10 | Gefäss | 29 | Trinköffnung |
| 11 | äusserer Boden | 30 | Verschluss |
| 12 | innerer Boden | 31 | Betätigungsbereich |
| 13 | Verbindungsbereich | 32 | Verschlusskörper |
| 14 | äussere Seitenwand | 33 | hakenartiger Bereich |
| 15 | innere Seitenwand | 34 | Träger |
| 16 | Manschette | 35 | Rastkerbe |
| 17 | Innengewinde | 36 | Federelement |
| 20 | Deckel | 37 | Anschrägung |
| 21 | Mantelwand | 40 | Mischeinheit |
| 22 | Deckwand | 41 | Gewindespindel |
| 23 | Aussengewinde | 42 | Mischelement |
| 24 | Vertiefung | 43 | Sicherungsmutter |
| 25 | Führungshülse | 44 | Buchse |
| 26 | Trinkkante | 45 | Griffelement |
| 27 | hinterer Randbereich | 46 | Griffbereich |
| 28 | Flankenbereich | 47 | Dichtelement |

## Patentansprüche

1. Getränkebereiter, aufweisend:
ein nach oben offenes Gefäss (10);
einen das Gefäss überdeckenden Deckel (20), in dem eine Entnahmeöffnung (29) ausgebildet ist;
eine sich durch eine Durchführungsöffnung des Deckels (20) hindurch in das Gefäss (10) hinein erstreckende, eine Längsachse definierende Betätigungsstange (41);
ein innerhalb des Gefässes (10) an der Betätigungsstange (41) angebrachtes Zubereitungselement (42);
ein ausserhalb des Gefässes (10) an der Betätigungsstange (41) angebrachtes Griffelement (45), das zusammen mit der Betätigungsstange (41) zwischen einer deckelnahen unteren Stellung und einer deckelfemen oberen Stellung bewegbar ist, und
einen mit dem Deckel bewegbar verbundenen Verschluss (30), der zwischen einer die Entnahmeöffnung (29) verschliessenden Schliessstellung und einer die Entnahmeöffnung (29) freigebenden Haltestellung um eine quer zur Längsachse verlaufende horizontale Schwenkachse gegenüber dem Deckel (20) verschwenkbar ist,
wobei in der Haltestellung der Verschluss (30) das Griffelement (45) in seiner unteren Stellung fixiert,
**dadurch gekennzeichnet, dass** am Verschluss (30) mindestens eine erste Raststruktur (35) ausgebildet ist, um den Verschluss (30) in der Haltestellung lösbar mit dem Deckel (20) zu verrasten.

2. Getränkebereiter nach Anspruch 1, wobei der Verschluss (30) über das Griffelement (45) hinweg von der Schliessstellung in die Haltestellung verschwenkbar ist, wenn sich das Griffelement (45) in seiner unteren Stellung befindet.

3. Getränkebereiter nach Anspruch 1 oder 2, wobei der Verschluss (30) in der Haltestellung das Griffelement (45) zumindest teilweise nach oben hin überdeckt.

4. Getränkebereiter nach Anspruch 3, wobei das Griffelement (45) einen achsnahen Bereich sowie einen vom achsnahen Bereich aus quer zur Längsachse hervorstehenden Bereich (46) aufweist, und wobei in der Haltestellung der Verschluss (30) den hervorstehenden Bereich (46) des Griffelements (45) zumindest teilweise überdeckt.

5. Getränkebereiter nach einem der vorhergehenden Ansprüche, wobei die erste Raststruktur (35) eine Rastkerbe umfasst, die in der Haltestellung mit einem hinteren Randbereich (27) des Deckels (20) verrastbar ist.

6. Getränkebereiter nach einem der vorhergehenden Ansprüche, wobei am Verschluss (30) mindestens eine zweite Raststruktur (33) ausgebildet ist, um den Verschluss (30) in der Schliessstellung lösbar mit dem Deckel zu verrasten.

7. Getränkebereiter nach Anspruch 6, wobei der Verschluss (30) einen vorstehenden Betätigungsbereich (31) aufweist, und wobei die zweite Raststruktur (33) durch einen hakenartig gebogenen Abschnitt des Betätigungsbereichs gebildet ist, der in der Schliessstellung einen vorderen Randbereich des Deckels überdeckt und mit diesem lösbar verrastet.

8. Getränkebereiter nach einem der vorhergehenden Ansprüche, wobei die Schwenkachse einen grösseren Abstand von der Entnahmeöffnung als die Längsachse aufweist.

9. Getränkebereiter nach einem der vorhergehenden Ansprüche, wobei der Deckel in einem vorderen Randbereich eine Trinkkante (26) aufweist, die dazu ausgebildet ist, ein durch die Entnahmeöffnung entnehmbares Getränk über die Trinkkante unmittelbar zum Mund zu führen.

10. Getränkebereiter nach einem der vorhergehenden Ansprüche, wobei im Deckel (20) eine Vertiefung (24) ausgebildet ist, die zumindest einen achsnahen Bereich des Griffelements (45) in der unteren Stellung des Griffelements (45) zumindest teilweise aufnimmt.

11. Getränkebereiter nach einem der vorhergehenden Ansprüche, wobei der Verschluss (30) einen Verschlusskörper (32) zum Verschliessen der Entnahmeöffnung (29) aufweist, und wobei der Verschluss zwei Arme (34) aufweist, die vom Verschlusskörper (32) aus beidseitig an der Durchführungsöffnung vorbeigeführt sind und deren freien Enden im Bereich der Schwenkachse schwenkbar mit dem Deckel (20) verbunden sind.

12. Getränkebereiter nach einem der vorhergehenden Ansprüche, wobei die Betätigungsstange (41) als Gewindespindel mit einem Aussengewinde ausgebildet ist und in der Durchführungsöffnung des Deckels (20) ein zum Aussengewinde komplementäres Innengewinde ausgebildet ist.

13. Getränkebereiter nach Anspruch 12, wobei das Griffelement (45) um die Längsachse drehbar an der Betätigungsstange (41) angebracht ist.

14. Getränkebereiter nach Anspruch 12 oder 13, wobei das Zubereitungselement (42) als Mischelement mit mindestens einem sich von der Betätigungsstange (41) aus quer zur Längsachse nach aussen erstreckenden Rührarm ausgebildet ist.

## Claims

1. A beverage maker having:
a vessel (10) which is open at the top;
a lid (20) which covers the vessel and in which a removal opening (29) is formed;
an actuation rod (41) which extends into the vessel (10) through a passage opening in the lid (20) and which defines a longitudinal axis;
a preparation element (42) which is attached to the actuation rod (41) inside the vessel (10);
a grip element (45) which is attached to the actuation rod (41) outside the vessel (10) and which, together with the actuation rod (41), is movable between a lower position close to the lid and an upper position remote from the lid, and
a closure (30) which is connected in a movable manner to the lid and which is pivotable with respect to the lid (20) between a closed position in which the removal opening (29) is closed and a retaining position in which the removal opening (29) is open about a horizontal pivot axis which runs transverse to the longitudinal axis,
wherein the grip element (45) is fixed in its lower position in the retaining position of the closure (30),
**characterized in that** at least a first latching structure (35) is formed on the closure (30) in order to latch the closure (30) to the cover (20) in a releasable manner in the retaining position.

2. The beverage maker as claimed in claim 1, wherein the closure (30) is pivotable over the grip element (45) from the closed position to the retaining position, when the grip element (45) is in its lower position.

3. The beverage maker as claimed in claim 1 or 2, wherein the closure (30) at least partially covers the grip element (45) at the top in the retaining position.

4. The beverage maker as claimed in claim 3, wherein the grip element (45) has a region close to the axis and a region (46) which projects from the region close to the axis transverse to the longitudinal axis, and wherein the closure (30) at least partially covers the projecting region (46) of the grip element (45) in the retaining position.

5. The beverage maker as claimed in one of the preceding claims, wherein the first latching structure (35) comprises a latching notch which can be latched to a rear border region (27) of the lid (20) in the retaining position.

6. The beverage maker as claimed in one of the preceding claims, wherein at least a second latching structure (33) is formed on the closure (30) in order to latch the closure (30) to the lid in a releasable manner in the closed position.

7. The beverage maker as claimed in claim 6, wherein the closure (30) has a protruding actuation region (31), and wherein the second latching structure (33) is formed by a portion of the actuation region which is bent in the manner of a hook and which covers a front border region of the lid in the closed position and latches with said front border region in a releasable manner.

8. The beverage maker as claimed in one of the preceding claims, wherein the pivot axis is at a greater distance from the removal opening than the longitudinal axis.

9. The beverage maker as claimed in one of the preceding claims, wherein the lid has a drinking edge (26) in a front border region, said drinking edge being designed to guide a beverage which can be removed through the removal opening directly to the mouth by means of the drinking edge.

10. The beverage maker as claimed in one of the preceding claims, wherein a recess (24) is formed in the lid (20), said recess at least partially accommodating at least a region of the grip element (45), which region is close to the axis, in the lower position of the grip element (45).

11. The beverage maker as claimed in one of the preceding claims, wherein the closure (30) has a closure body (32) for closing the removal opening (29), and wherein the closure has two arms (34) which are guided from the closure body (32) past the passage opening on both sides and of which the free ends are connected to the lid (20) in a pivotable manner in the region of the pivot axis.

12. The beverage maker as claimed in one of the preceding claims, wherein the actuation rod (41) is in the form of a threaded spindle with an external thread, and an internal thread which complements the external thread is formed in the passage opening of the lid (20).

13. The beverage maker as claimed in claim 12, wherein the grip element (45) is attached to the actuation rod (41) such that it is rotatable about the longitudinal axis.

14. The beverage maker as claimed in claim 12 or 13, wherein the preparation element (42) is in the form of a mixing element having at least one stirring arm which extends outward from the actuation rod (41) transverse to the longitudinal axis.

## Revendications

1. Préparateur de boissons, comprenant :
un récipient ouvert vers le haut (10) ;
un couvercle (20) recouvrant le récipient, dans lequel est réalisée une ouverture de prélèvement (29) ;
une tige d'actionnement (41) définissant un axe longitudinal, s'étendant à travers une ouverture de passage du couvercle (20) dans le récipient (10) ;
un élément de préparation (42) monté à l'intérieur du récipient (10) sur la tige d'actionnement (41) ;
un élément de préhension (45) monté à l'extérieur du récipient (10) sur la tige d'actionnement (41),
lequel peut être déplacé conjointement avec la tige d'actionnement (41) entre une position inférieure proche du couvercle et une position supérieure éloignée du couvercle, et
une fermeture (30) connectée de manière déplaçable au couvercle, laquelle peut pivoter par rapport au couvercle (20) autour d'un axe de pivotement horizontal s'étendant transversalement à l'axe longitudinal entre une position de fermeture fermant l'ouverture de prélèvement (29) et une position de retenue libérant l'ouverture de prélèvement (29),
la fermeture (30) fixant l'élément de préhension (45) dans sa position inférieure dans la position de retenue de la fermeture (30),
**caractérisé en ce qu'**au moins une première structure d'encliquetage (35) est réalisée au niveau de la fermeture (30), afin d'encliqueter la fermeture (30) de manière amovible avec le couvercle (20) dans la position de retenue.

2. Préparateur de boissons selon la revendication 1, dans lequel la fermeture (30) peut pivoter au-delà de l'élément de préhension (45) de la position de fermeture dans la position de retenue, lorsque l'élément de préhension (45) se trouve dans sa position inférieure.

3. Préparateur de boissons selon la revendication 1 ou 2, dans lequel la fermeture (30) recouvre au moins partiellement vers le haut l'élément de préhension (45) dans la position de retenue.

4. Préparateur de boissons selon la revendication 3, dans lequel l'élément de préhension (45) présente une région proche de l'axe ainsi qu'une région (46) faisant saillie transversalement par rapport à l'axe longitudinal depuis la région proche de l'axe, et dans lequel, dans la position de retenue, la fermeture (30) recouvre au moins en partie la région saillante (46) de l'élément de préhension (45).

5. Préparateur de boissons selon l'une quelconque des revendications précédentes, dans lequel la première structure d'encliquetage (35) comprend une encoche d'encliquetage, qui peut être encliquetée dans la position de retenue avec une région de bord arrière (27) du couvercle (20).

6. Préparateur de boissons selon l'une quelconque des revendications précédentes, dans lequel au moins une deuxième structure d'encliquetage (33) est réalisée au niveau de la fermeture (30), afin d'encliqueter la fermeture (30) au couvercle de manière amovible dans la position de fermeture.

7. Préparateur de boissons selon la revendication 6, dans lequel la fermeture (30) présente une région d'actionnement saillante (31), et dans lequel la deuxième structure d'encliquetage (33) est formée par une portion de la région d'actionnement recourbée en forme de crochet, qui recouvre une région de bord avant du couvercle dans la position de fermeture et qui s'encliquète de manière amovible avec ce dernier.

8. Préparateur de boissons selon l'une quelconque des revendications précédentes, dans lequel l'axe de pivotement présente une plus grande distance à l'ouverture de prélèvement que l'axe longitudinal.

9. Préparateur de boissons selon l'une quelconque des revendications précédentes, dans lequel le couvercle, dans une région de bord avant, présente un bec pour boire (26) qui est réalisé de manière à guider directement à la bouche par le biais du bec pour boire une boisson pouvant être prélevée hors de l'ouverture de prélèvement.

10. Préparateur de boissons selon l'une quelconque des revendications précédentes, dans lequel un renfoncement (24) est réalisé dans le couvercle (20), lequel reçoit au moins en partie au moins une région proche de l'axe de l'élément de préhension (45) dans la position inférieure de l'élément de préhension (45).

11. Préparateur de boissons selon l'une quelconque des revendications précédentes, dans lequel la fermeture (30) présente un corps de fermeture (32) pour fermer l'ouverture de prélèvement (29), et dans lequel la fermeture présente deux bras (34) qui sont guidés devant l'ouverture de passage depuis le corps de fermeture (32) des deux côtés et dont les extrémités libres sont reliées de manière pivotante au couvercle (20) dans la région de l'axe de pivotement.

12. Préparateur de boissons selon l'une quelconque des revendications précédentes, dans lequel la tige d'actionnement (41) est réalisée sous forme de broche filetée avec un filetage extérieur, et un filetage interne complémentaire au filetage externe est réalisé dans l'ouverture de passage du couvercle (20).

13. Préparateur de boissons selon la revendication 12, dans lequel l'élément de préhension (45) est monté sur la tige d'actionnement (41) de manière à pouvoir tourner autour de l'axe longitudinal.

14. Préparateur de boissons selon la revendication 12 ou 13, dans lequel l'élément de préparation (42) est réalisé sous forme d'élément mélangeur avec au moins un bras mélangeur s'étendant vers l'extérieur depuis la tige d'actionnement (41) transversalement à l'axe longitudinal.
